# EUROPEAN PATENT APPLICATION

(11) **EP 1 310 869 A1**
(43) Date of publication of application: **14.05.2003**
(21) Application number: 01410150.5
(22) Date of filing: 12.11.2001
(51) Int. Cl.: G06F 9/46

(54) **Data processing system and method**

(71) Applicant: Hewlett-Packard Company, Palo Alto, CA 94304 (US)
(72) Inventor: Chaboud, François Xavier, 38000 Grenoble (FR); Drif, Dany, 73000 Chambéry (FR)
(74) Representative: Lloyd, Richard Graham (GB)

(57) **Abstract**

The present invention relates to a data processing system and method and, more particularly, to a data processing system and method which requests additional resources in response to changes in the performance of the data processing system. Accordingly, the present invention provides a data processing system comprising at least locally system resources; a monitor for monitoring utilisation of at least one resource of the system resources; an access controller for determining that the utilisation of the at least one resource has passed a predetermined threshold for performing a task and managing access to at least one of remotely accessible system resource and the locally accessible system resources; the access controller being arranged to allocate sufficient system resources for performing the task, in response to the determination that the utilisation of the at least one resource has passed the predetermined threshold. Advantageously, the access controller manages the allocation of resources to allow tasks to be performed and notifies a user or system administrator of the need to improve the system when the performance thereof is inadequate.

## Description

### Field of the invention

The present invention relates to a data processing system and method and, more particularly, to a data processing system and method for monitoring and meeting the performance requirements of a client machine.

### Background to the invention

Computers or data processing systems have a limited number of system resources with which they can execute given tasks. The resources include both hardware and software such as processor capacity and speed, memory capacity, internal and external communication bandwidths and so on. If a computer runs low on resources or has insufficient resources to perform a given task, current solutions are to either delay performing the given task until sufficient resources are available or to fail to perform the given task at all. It will be appreciated that both of these options are clearly undesirable in circumstances where a given task must be performed. Often a user does not understand the technical reason behind the lack of performance and does not have a sufficient technical understanding to correct the under-performance.

It is an object of the present invention to at least mitigate some of the problems of the prior art.

### Summary of the Invention

Accordingly, a first aspect of the present invention provides a data processing method for a data processing system comprising at least one of locally and remotely accessible system resources; the method comprising the steps of
determining that the utilisation of at least one resource of the system resources has passed a predetermined threshold for performing a task; and
allocating, in response to the determination, sufficient system resources for performing the task.

Preferred embodiments provide a method further comprising the step of outputting a message containing data relating to at least one of the current utilisation of the at least one system resource and the allocation of the sufficient system resources. Preferably, the data contained within the message comprises an indication of a recommended course of action to at least alleviate the need to allocation sufficient system resources.

Advantageously, since the allocation of resources is monitored, a user or system administrator may be informed when the performance of a given task drops below a required performance level due to insufficient system resources.

It will be appreciated in some circumstances, the resource being used relates to a locally accessible system resource. Suitably, embodiments provide a method in which the step of allocating comprises allocating the locally accessible system resources. In effect, the current allocation of locally accessible resources is expanded.

However, in other circumstances, it may not be possible to increase the allocation of the locally accessible resources since the use of those resources may have reached a maximum. Accordingly, embodiments provide a method in which the step of allocating comprises the step of allocating remotely accessible system resources. Preferably, embodiments provide a method in which the step of the allocating remotely accessible system resources is performed if there are insufficient local system resources to perform the task.

Preferred embodiments provide a method further comprising the step of mapping a request to use locally accessible system resources to at least one of a request to use or to use the allocated, remotely accessible, system resources. Since a mapping is established to record the use of a remotely accessible resource, the application requesting the use of a resource does not need to be modified to take into account that the resource being provided is a remotely accessible resource. In a preferred embodiment, a request to access a local HDD is mapped to access the use of or to a request to use a network drive.

Preferably, the performance of the use of resources is monitored to provide data to a user or system administrator, which allows them to improve the system. Suitably, embodiments provide a method further comprising the step of recording an indication of the allocation of the remotely accessible system resources.

The historical data allows system configuration decisions to be made. Therefore, embodiments of the present invention provide a method in which the step of determining comprises the step of accessing a record of historical data relating to the allocation of the system resources. It will be appreciated that embodiments will, therefore, also preferably provide a method further comprising the step of updating the record of the historical data to reflect the allocation of system resources.

Preferred embodiments provide a method in which the step of determining comprises the step of accessing a resource allocation permission profile containing data relating to the predetermined threshold.

A second aspect of the present invention provides a data processing system comprising at least locally allocated system resources; an access controller for managing access to at least one of remotely accessible system resources and the locally accessible system resources and determining that the utilisation of the at least one resource of the system resources has passed a predetermined threshold for performing a task; a monitor for monitoring utilisation of the at least one resource of the system resources; the access controller being arranged to allocate sufficient system resources for performing the task, in response to a determination that the utilisation of the at least one resource has passed the predetermined threshold.

Preferred embodiments provide a system further comprising means to output a message containing data relating to at least one of the current utilisation of the at least one system resource and the allocation of the sufficient system resources. Preferably, the data contained within the message comprises an indication of a recommended course of action to at least alleviate the need to allocate sufficient system resources. Suitably, a user or system administrator can be informed of the need for improvements or upgrades to be made to the machine.

Preferably, embodiments provide a system in which the access controller comprises means to allocate the local system resources.

Embodiments also provide a system in which the access controller comprises means to allocate the remotely accessible system resources. Preferably, the access controller comprises means to allocate the remotely accessible system resources if there are insufficient local system resources to perform the task.

Preferred embodiments provide a system in which the access controller comprises means to map a request to use local system resources to use of, or to a request to use, the allocated, remotely accessible, system resources.

Embodiments provide a system in which the access controller further comprises means to record an indication of the allocation of the remotely accessible system resources. Preferably, embodiments provide a system in which the access controller comprises means to access a record of historical data relating to the allocation of the system resources.

Furthermore, a system is provided in which the resource allocator further comprises means to update the record of the historical data to reflect the allocation of system resources.

Embodiments preferably provide a system in which the access controller comprises means to access a resource allocation permission profile, the profile containing data relating to the predetermined threshold.

A further aspect of the present invention provides a method comprising the steps of assigning a current capacity of a system resource for performance of a given task; determining that the given task is not being performed in accordance with a first metric; and assigning a second capacity of the resource or performance of the given task; the second capacity being greater than the first capacity.

### Brief description of the drawings

Embodiments of the present invention will now be described, by way of example only, with reference to the accompanying drawings in which:
figure 1 shows a data processing system according to an embodiment;
figure 2 illustrates a flow chart for data processing according to an embodiment; and
figure 3 illustrates a further flow chart for data processing according to an embodiment.

### Description of the preferred embodiments

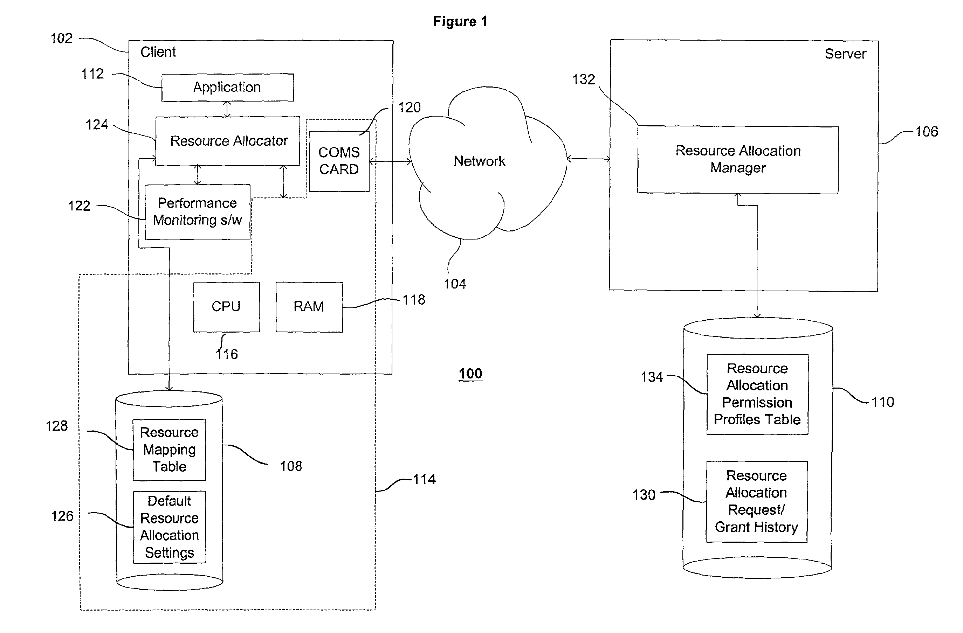

Referring to figure 1 there is shown a data processing system 100 comprising a client machine 102 that communicates via a network 104 with a server 106. Both the client machine 102 and the server 106 have persistent storage 108 and 110 respectively.

The client machine can execute a number of tasks such as running an application 112. The client machine 102 has a number of local resources 114 that can be used to execute the application 112.

The local resources 114 include, for example, a CPU 116, the persistent storage 108, RAM 118 and a communications card 120 having a given bandwidth.

A performance monitor 122 is provided to monitor the utilisation and/or performance of the local resources. For example, the communication rate of the communications card 120, in terms of bytes per second, can be measured. The percentage utilisation of RAM 118 or persistent storage 108 can also be measured as can the percentage utilisation of the CPU 116. The performance monitor 122 communicates with a resource allocator 124 to provide performance monitoring metric information to the resource allocator. The resource allocator 124 is arranged to compare the current performance or utilisation of local resources 114 with corresponding thresholds to determine whether those thresholds have been exceeded.

The resource allocator 124 communicates with the given task, that is, the application 112, to determine the processing capacity or local resources that will be needed by the application 112. The resource allocator 124 manages requests from the application 112 for access to system resources and assigns the resources to meet the request if those resources are available.

For example, the application 112 may attempt to write to the persistent storage 108 of the client machine 102 using a command such as (open "c:*file name",* [*data*]). It is clear in this example that the application has requested storage capacity on the C drive. The performance monitor 122 will provide, in response to a request from the resource allocator 124, an indication of the current utilisation of the C drive. If the current utilisation of the C drive has exceeded a corresponding threshold, the request by the application 112 for resources either cannot be met or can only be met by assigning additional storage capacity for use by the application 112.

Preferably, the performance metrics can be determined on a per client machine basis, a per application or task basis or a combination of the two. Default resource allocation settings are stored within a file 126 on the persistent storage 108 of the client machine 102. The default resource allocation settings represent initialisation values or settings against which the resource allocator 124 can compare current resource utilisation.

The allocation of the resources and the changes of the allocation of the resources by the resource allocator 124 are recorded in a resource mapping table 128 which is also stored on the persistent storage 108. The resource mapping table 128 is used by the resource allocator 124 to track or record the allocation of resources to the application 112.

The operation of the above embodiment will now be described. Assume that the default resource allocation setting 126 for the communications card 120 are such that the application 112 is initially assigned 10% of the available maximum bandwidth (BW) of the communications card 120. In effect, the maximum bandwidth BW is divided into ten 10% slots. Alternatively, the type of application 112 can be categorised and any application within a given category can be initialised as being entitled to 10% of the available bandwidth of the communications card 120.

Still further, the threshold for any communication link established by any application may be set at being not less than a predetermined number of bytes per second. Assume that the application instigates transmission of data via the coms card 120 over the network 104 to another system such as, for example, the server 106. It will be appreciated that some other data processing system could be the recipient of the data transmitted by the client machine 102. If the performance monitor 122 detects that the data rate has fallen below the predetermined number of bytes per second, the resource allocator 124 can be informed and appropriate action can be taken. If the communications card 120 has additional available bandwidth, a portion of that bandwidth can be made available for use by the application. In effect, the bandwidth available for use by the application 112 is increased until the data rate is no longer below the predetermined number of bytes per second.

The need for the resource allocator 124 to have increased resources available to the application 112 is recorded in a resource allocation request/grant history file 130. Although the resource allocation request/grant history file 130 is shown in figure 1 as being held on the persistent storage 110 of server 106, embodiments can be realised in which the resource allocation request/grant history file 130 is stored on some other medium such as, for example, the persistent storage 108 of the client machine 102.

It can be appreciated from the above that the overall performance of the client machine 102 is managed by appropriate assignment of local resources 114 by the resource allocator 124.

A further example of the operation of an embodiment of the present invention will now be described. Assume that the application 112 requests persistent storage resources to store data within a file (not shown) and also assume that the persistent storage 108 or at least that a percentage of the persistent storage assigned to the application 112 would be exceeded if the file was stored on the persistent storage 108. The resource allocator 124 receives from the application 112 a request to store the file. The performance monitor 122 monitors on an ongoing basis in response to a request received from the resource allocator 124, the available storage capacity of the persistent storage 108 of the client machine 102. The resource allocator 124 determines whether or not the request received from the application 112 can be accommodated using the persistent storage. If it is determined that the request can be accommodated, the file is stored on the persistent storage 108 in the conventional manner. However, if it is determined that the request cannot be accommodated, the resource allocator transmits a request via the network 104 to a resource allocation manager 132 running on the server 106. The request transmitted to the resource allocation manager 132 is for additional persistent storage to be made available to meet the request received from the application 112. The resource allocation manager 132 determines from a resource allocation permission profiles table 134, which is stored on the persistent storage 110 of the server 106, whether or not the request received from the resource allocator 124 can be accommodated.

The resource allocation permission profiles table 134 contains a list of resources and corresponding permission profiles which determine whether or not requested resources can, under corresponding conditions, be allocated in response to receiving a request for those resources.

In the present example, the resource allocation manager 132 determines from the resource allocation permission profiles table 134 whether the request for additional storage capacity can be met. If the request for additional storage capacity can be met, the resource allocation manager 132 transmits a response to the resource allocator 124, which indicates that the request for additional storage capacity can be accommodated. The resource allocation manager 132 also reserves a predetermined amount of persistent storage 110 or of some other form of persistent storage (not shown) for use by the application 112. In response to receiving a negative determination, that is, in response to an indication that the request for further storage cannot be met, the resource allocator 124 outputs to the application an indication that the request for further storage cannot be met. The application will respond accordingly. Typically, the application will output an error message to the user of the client machine 102 indicating that the system has insufficient storage capacity. In response to receiving a positive determination, that is, in response to the requested resources being made available, the resource allocator 124 outputs a message to the application 112 that the resources have been made available and, in the present example, provides an appropriate file descriptor for use by the application in storing data on the resources.

The resource allocator 124 also stores within the resource mapping table 128 an indication that resources of the server 106 have been made available to the application 112 together with an indication of the data stored on those available resources. Hence, in the future, whenever the resource allocator 124 receives a request from the application 112 to read the file that was stored on the remote resources, the resource allocator 124 determines from the resource mapping table 128 whether or not the requested file is stored on the local resources, i.e. the persistent storage 108, or whether that file was stored remotely on the persistent storage 110 of the server 106. If the determination by the resource allocator 124 is that the requested file was stored locally, that file is opened and made available to the application 112 in the conventional manner. However, if the determination is that the file was stored using remote resources, a request for access to that file is transmitted by the resource allocator 124 to the resource allocation manager 132. In response to receiving that request, the resource allocation manager 132 makes the file available to the resource allocator 124 and hence the application 112.

It will be appreciated that the use of remote resources or the request for additional remote or local resources to meet the needs of any given task is transparent to that task. Therefore, in the above example, the application, in the case of reading from or writing to a file, will open that file using for example, open ("c:*file name,* ...) and, even though the C drive may be full and the file, *file name,* is stored on the persistent storage 110 of the server 106, for example, on Z:, the application 112 still uses the original path name C: etc. rather than Z: etc. This transparency is achieved using the resource mapping table 128 and the resource allocator 124, which manages the resource requests of the application 112.

The resource allocator 124 or, preferably, the resource allocation manager 132, monitors the assignment of additional resources to a given task. If the number of requests exceeds a predetermined metric, a message is output to, for example, a system administrator or the user of the client machine 102 of this threshold having been exceeded. The message may also include a recommended course of action intended to reduce the assignment of the additional resources to the given task.

For example, if for more than 50% of the occasions that the application 112 has been executed, the application requested additional resources, such as additional persistent storage capacity, a message may be output to the system administrator or the user of the client machine 102 that the local resources, that is, the capacity of the persistent storage 108 locally accessible by the client machine 102 should be increased by a particular amount. The increase in local storage capacity can be met in one of two ways. If the application is assigned a predetermined portion of the persistent storage 108, upon initialisation or initial execution of the application 112 the size of that initial portion of the persistent storage 108 is increased by a predetermined amount. For example, if the application 112 is initially assigned one gigabyte of persistent storage and on more than 50% of the occasions that the application has been executed additional persistent storage had been requested, the resource allocator 124 may assign for future use a persistent storage allocation of 1.5 gigabytes. It will be appreciated that the size of the increase in additional storage will be determined so that the metric associated with meeting the requests for this additional resource is no longer exceeded, that is, the additional disk capacity will be calculated to be such that the application 112 requests and is assigned additional resources less than on 50% of the occasions that the application 112 is executed. Preferably, the resource allocator will also output a message containing an indication of the need to increase the storage capacity of the persistent storage.

Alternatively, the message output to the user of the client machine 102 or a system administrator may be an indication of the frequency with which additional resources have been assigned to the application 102 together with an indication that the current persistent storage 108 should be replaced with persistent storage having a significantly greater local storage capacity. For example, the message may contain a recommended course of action such as, for example, "*It is suggested that the storage capacity of the HDD is increased by replacement of the current HDD or by the addition of a further local HDD*". A similar message may be output in respect of other system resources such as RAM, communications cards, etc.

Although the above embodiments have been described with reference to assigning additional disk capacity or bandwidth to an application, the present invention is not limited to such arrangements. The additional resource assigned to an application may be, for example, additional CPU time as is well understood within the art within a multitasking environment. Hence, the amount of processor time allocated to any given thread can be varied or can have associated maximum or minimum thresholds, which should not be exceeded. Therefore, if the application 112 is launched on a particular thread and the resource allocator 124 determines that the CPU 116 does not have sufficient capacity to accommodate the execution of the application 112 on that thread or the maximum number of the maximum permissible number of threads has been or would be exceeded, the resource allocator 124 transmits message to the resource allocation manager 132 for additional CPU capacity to be made available to the newly launched thread. The requested additional CPU capacity, assuming the resource allocation permission profiles table 134 indicates that the assignment of the requested resources is permissible, is made available by the resource allocation manager 132. The resource allocation manager 132 transmits a message to that effect to the resource allocator 124 which in response to performing tasks for the application 112 or in response to executing the application 112, transmits the job to be performed to the resource allocation manager 132 and concurrently records the fact that remote CPU resources have been made available to the application 112 in the resource mapping table 128.

Upon receipt of the job for execution, the resource allocation manager 132 ensures that the job is executed and that the results of the processing are returned to the resource allocator 124 and ultimately to the application 112 executing on its corresponding thread. It will be appreciated that the processing performance witnessed by applications on other threads that are executing at the client machine 102 will not be impaired due to the most recently launched application executing on a thread which is effectively a remote thread.

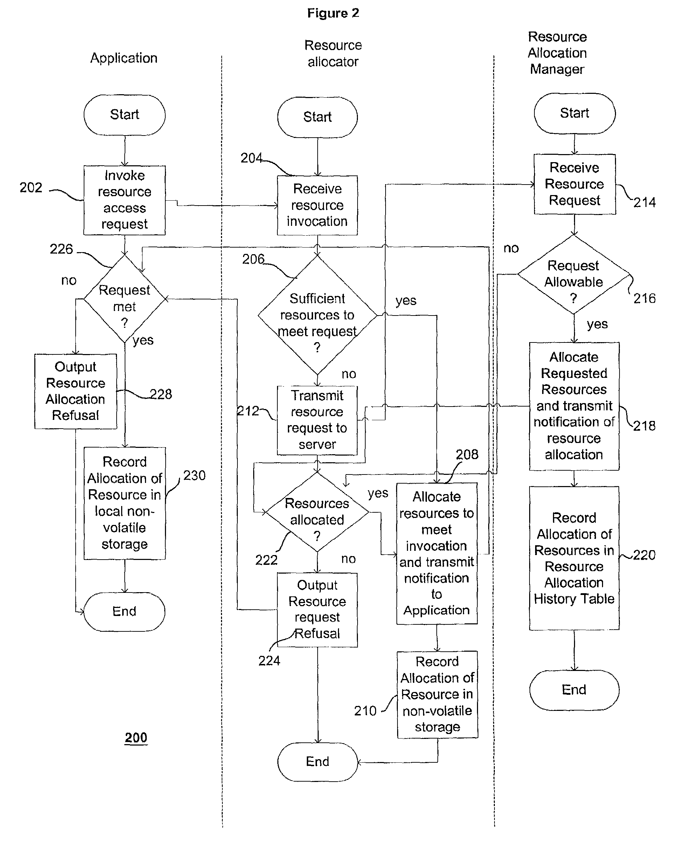

Referring to figure 2 there is shown a number of flow charts 200 of the processing undertaken by the application 112, the resource allocator 124 and the resource allocation manager 132.

At step 202 the application 102 produces or invokes a resource access request. The resource access request is received by the resource allocator 124 at step 204. It is determined at step 206 whether there are sufficient resources to meet the request. If there are sufficient resources to meet the request, the resources are allocated and a notification is transmitted to the requesting application at step 208 of the allocation of resources. A record of the allocation of resources is made in persistent storage 110 at step 210 in the resource allocation request/grant history file 130.

If at step 206 it is determined that there are insufficient local resources to meet the request, a resource request message is transmitted to the resource allocation manager 132 running at the remote server 106 at step 212. The message requests allocation of the appropriate resources.

The resource allocation manager 132 receives the resource request message at step 214. It is determined at step 216 whether or not the resources should be allocated. If the resource request is allowable, the resources are made available at the server 106 and a notification to that effect is transmitted to the resource allocator 124 at step 218. A record of the allocation of the resources is made in the resource allocation request/grant history file 130 at step 220. It is determined at step 222 whether or not the requested resources have been allocated. If the requested resources have been allocated, processing continues at step 208. However, if the resource allocation manager has not allocated the resources, a notification of the refusal of the request for further resources is transmitted from the resource allocator to the application at step 224. It is determined at step 226 whether or not the requested resources have been allocated. If the requested resources have not been allocated, a message is output to the user at step 228, which indicates the refusal of the resource allocation request. However, if the request for resource allocation has been accommodated, a record is made of the allocation of resources in local non-volatile storage 130 in the resource mapping table 128 step 230 and the processing of the application continues as normal.

As indicated above, the notification of the refusal of the request is accompanied by a recommended course of action for the user or system administrator to alleviate the need for additional resources requests.

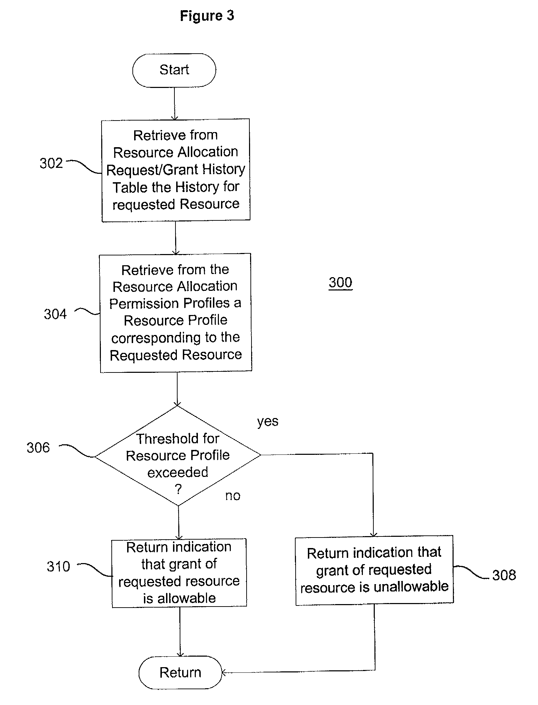

Referring to figure 3 there is shown a flow chart 300 of the processing undertaken at step 216 of figure 2 in deciding whether or not the requested resources should be allocated. At step 302 the resource allocation request/grant history table 130 is accessed to determine the history of resource requests and resource grants associated with the current request for resources.

The resource allocation request/grant history table 130 may contain, for example, an indication of a resource that is needed or that was granted, the duration for which a resource is needed or was granted, the date and time of the request or grant, a user identifier, an indication of the application by which or on behalf of which the request was issued or to which the grant was made.

The resource allocation permission profiles table 134 is accessed at step 304 to retrieve the profile associated with the allocation of the requested resource. For example, the resource allocation permission profiles table 130 may contain an indication that users are only allowed to request 20% more disk space as compared to their current total disk space. Another example of a resource allocation permission profile table entry would be data reflecting that an identified user or application cannot be allocated more than 15% of the available network bandwidth for transmitting or receiving a particular type of information. However, various limits may be imposed in respect of different types of information. For example, 15% of the available network bandwidth may be reserved by an application for receiving and playing an MP3 file whereas 50% of the available network bandwidth may be made available for browsing corporate web-sites.

A determination is made at step 306 using the data contained within the resource allocation request/grant history table 130 and the resource allocation permission profiles table 134 whether or not granting the resource allocation request would exceed a threshold for the profile corresponding to the request. If it is determined at step 306 that the threshold would be exceeded, a notification of the refusal of the request for further resources is returned at step 308. However, if it is determined that the threshold for the requested resource would not be exceeded by the grant, a notification that the resources should be allocated is returned at step 310.

Although the above embodiments have been described with reference to the resource allocation manager running on a remote server, it will be appreciated that the resource allocation manager could equally well run at the client machine 102. Furthermore, the function of both the resource allocator and the resource allocation manager may be incorporated into an access controller that manages access to the system resources. Such an access controller may encompass one of and preferably both of the resources allocator and the resource allocation manager.

## Claims

1. A data processing method for a data processing system comprising at least one of locally and remotely accessible system resources; the method comprising the steps of
determining that the utilisation of the at least one resource of the system resources has passed a predetermined threshold for performing a task; and
allocating, in response to the determination, sufficient system resources for performing the task.

2. A method as claimed in claim 1, in which the step of allocating comprises allocating the locally accessible system resources.

3. A method as claimed in any preceding claim, in which the step of allocating comprises the step of allocating the remotely accessible system resources.

4. A method as claimed in claim 3, in which the step of allocating the remotely accessible system resources is performed if there are insufficient local system resources to perform the task.

5. A method as claimed in either of claims 3 and 4, further comprising the step of mapping a request to use locally accessible system resources to a request to use or to the use of the allocated, remotely accessible, system resources.

6. A method as claimed in any preceding claim, further comprising the step of recording an indication of the allocation of the remotely accessible system resources.

7. A method as claimed in any preceding claim, in which the step of determining comprises the step of accessing a record of historical data relating to the allocation of the system resources.

8. A method as claimed in claim 7, further comprising the step of updating the record of the historical data to reflect the allocation of system resources.

9. A method as claimed in any preceding claim, in which the step of determining comprises the step of accessing a resource allocation permission profile containing data relating to the predetermined threshold and comparing the predetermined threshold with a current utilisation of the system resources.

10. A method as claimed in any preceding claim, further comprising the step of outputting a message containing data relating to at least one of the current utilisation of the at least one system resource and the allocation of sufficient system resources.

11. A method as claimed in claim 10, in which the data comprises an indication of a recommended course of action to at least alleviate the need to allocate sufficient system resources.

12. A data processing system comprising at least locally accessible system resources; an access controller for managing access to at least one of remotely accessible system resources and the locally accessible system resources and determining that the utilisation of the at least one resource of the system resources has passed a predetermined threshold for performing a task; a monitor for monitoring utilisation of the at least one resource of the system resources; the access controller being arranged to allocate sufficient system resources for performing the task, in response to a determination that the utilisation of the at least one resource has passed the predetermined threshold.

13. A system as claimed in claim 12, in which the access controller comprises means to allocate the local system resources.

14. A system as claimed in either of claims 12 and 13, in which the access controller comprises means to allocate the remotely accessible system resources.

15. A system as claimed in claim 14, in which the access controller comprises means to allocate the remotely accessible system resources if there are insufficient local system resources to perform the task.

16. A system as claimed in either of claims 14 and 15, in which the access controller comprises means to map a request to use local system resources to use of, or to a request to use, the allocated, remotely accessible, system resources.

17. A system as claimed in any of claims 12 to 16, in which the access controller further comprises means to record an indication of the allocation of the remotely accessible system resources.

18. A system as claimed in any of claims 12 to 17, in which the access controller comprises means to access a record of historical data relating to the allocation of the system resources.

19. A system as claimed in claim 18, in which the resource allocator further comprises means to update the record of the historical data to reflect the allocation of system resources.

20. A system as claimed in any of claims 12 to 19, in which the access controller comprises means to access a resource allocation permission profile, the profile containing data relating to the predetermined threshold.

21. A system as claimed in any of claims 12 to 20, further comprising means to output a message containing data relating to at least one of the current utilisation of the at least one system resource and the allocation of the sufficient system resources.

22. A system as claimed in claim 21, in which the data comprises an indication of a recommended course of action to at least alleviate the need to allocation sufficient system resources.

23. A computer program element comprising computer program code for implementing a method or system as claimed in any preceding claim.

24. A computer program product comprising a computer readable storage medium having stored thereon a computer program element as claimed in claim 14.
